# EUROPEAN PATENT APPLICATION

(11) **EP 4 064 509 A1**
(43) Date of publication of application: **28.09.2022**
(21) Application number: 21827374.6
(22) Date of filing: 28.01.2021
(51) Int. Cl.: H02J 7/00, B60L 53/62, B60L 58/27, H01M 10/44, B60L 53/20, B60L 53/30, B60L 58/12, H01M 10/615

(54) **CHARGING METHOD AND POWER CONVERSION DEVICE**

(71) Applicant: Contemporary Amperex Technology Co., Limited, Jiaocheng District Ningde City, Fujian 352100 (CN)
(72) Inventor: XIONG, Shuyun, Ningde, Fujian 352100 (CN); DAN, Zhimin, Ningde, Fujian 352100 (CN); YAN, Yu, Ningde, Fujian 352100 (CN); LI, Zhanliang, Ningde, Fujian 352100 (CN); SUN, Weiping, Ningde, Fujian 352100 (CN)
(74) Representative: Herrero & Asociados, S.L.
(86) International application number: PCT/CN2021/074163
(87) International publication number: WO 2022/160182

(57) **Abstract**

Embodiments of the present application provides a charging method and a power conversion equipment, which can effectively ensure a normal charging of a traction battery. The charging method is used for charging the traction battery, the method includes: obtaining , by a power conversion equipment, a battery state parameter of the traction battery; sending , by the power conversion equipment, a charging information to a charging pile, the charging information includes a direct current charging parameter calculated from a pulse charging parameter; receiving , by the power conversion equipment, a direct current output by the charging pile, on the basis of the direct current charging parameter; converting, by the power conversion equipment, the direct current into a pulse current on the basis of the pulse charging parameter, the pulse current is used for charging the traction battery; where, the battery state parameter is used for determining the pulse charging parameter.

## Description

### TECHNICAL FIELD

The present application relates to the field of traction batteries, and particularly relates to a charging method and a power conversion equipment.

### BACKGROUND

With the aggravation of energy shortage and environmental pollution in modern society, electric vehicles, as new energy vehicles, have attracted wide attention from all walks of life. However, the charging problem of the electric vehicle has always been the main factor limiting its development.

Therefore, how to ensure the normal charging of electric vehicles is an urgent problem to be solved.

### SUMMARY

Embodiments of the present application provide a charging method and a power conversion equipment, which can effectively ensure a normal charging of an electric vehicle.

A first aspect provides a charging method for charging the traction battery, the method includes: obtaining, by a power conversion equipment, a battery state parameter of the traction battery; sending, by a power conversion equipment, a charging information to a charging pile, the charging information including a direct current charging parameter calculated by a pulse charging parameter; receiving, by a power conversion equipment, a direct current output by the charging pile on the basis of the direct current charging parameter; converting, by a power conversion equipment, the direct current into a pulse current on the basis of the pulse charging parameter, the pulse current being used for charging the traction battery; where, the battery state parameter is used for determining the pulse charging parameter.

The above technical solution connects the power conversion equipment between the charging pile and the traction battery, the power conversion equipment can convert the direct current output by the charging pile into a pulse current, and transmit the converted pulse current into the traction battery, which can avoid the problem of the ranges of voltage and current output by the charging pile being unable to match with the traction battery in some scenarios, thereby ensuring the normal charging of the traction battery. In addition, the battery state parameter can be a parameter which can most reflect the traction battery state, the pulse current converted from the battery state parameter can effectively ensure the normal power supply of the traction battery.

In some possible embodiments, the method further includes: determining, by a power conversion equipment, the pulse charging parameter on the basis of the battery state parameter, the pulse charging parameter including at least one parameter of the following parameters: a pulse current effective value, a pulse current peak, a pulse voltage, a pulse direction, a pulse frequency, a pulse interval and a pulse duration.

The above technical solution, the power conversion equipment may determine the corresponding pulse charging parameter on the basis of obtained battery state parameter of the traction battery, which can adapt different charging demands of the traction battery in different situations, having a high flexibility and adaptability.

In some possible embodiments, the battery state parameter includes at least one parameter of the following parameters: a battery temperature, a battery voltage, a battery capacity and a state of charge (SOC) of battery.

In some possible embodiments, the direct current charging parameter includes an output voltage and/or an output current of the charging pile.

In some possible embodiments, the method further includes: determining, by the power conversion equipment, to enter a pulse charging mode on the basis of the battery state parameter, the pulse charging mode is a charging mode using a pulse-type voltage or a pulse-type current.

Since the battery state parameter can be a parameter which most reflect the traction battery state, the above technical solution of determining to enter the pulse charging mode on the basis of battery state parameter can improve the accuracy rate of entering into the pulse charging mode.

In some possible embodiments, the battery state parameter includes a battery temperature, the determining, by the power conversion equipment, to enter a pulse charging mode on the basis of the battery state parameter, including: under the battery temperature is less than or equal to a temperature threshold condition, determining, by the power conversion equipment, to enter the pulse charging mode.

In the low-temperature environment, a power conversion equipment enters the pulse charging mode to convert the direct current output by the charging pile into pulse current, which avoids the problem that the lithium battery cannot be charged in the low-temperature environment. Compared with the traditional way, with the above technical solution, it is not necessary to provide a heating device in the battery pack to pre-heat the traction battery, so that the charging time can be greatly shortened, the battery temperature can be rapidly increased, and the charging efficiency of the traction battery can be effectively improved. Furthermore, since the heating device is not disposed in the battery pack, the technical solution can also reduce the weight and cost of the traction battery.

In some possible embodiments, the obtaining, by a power conversion equipment, a battery state parameter of the traction battery, includes: receiving, by a power conversion equipment, the battery state parameter sent by a battery management system (BMS) of the traction battery.

A second aspect provides a charging method for charging a traction battery, the method being applied in a power conversion equipment, the power conversion equipment including a control unit and a power unit, the method including: obtaining, by the control unit, a the battery state parameter of the traction battery; obtaining, by the control unit, a pulse charging parameter on the basis of the battery state parameter; transmitting, by the control unit, the pulse charging parameter to the power unit; obtaining, by the control unit, a direct current charging parameter calculated by the power unit on the basis of the pulse charging parameter; sending, by the control unit, the direct current charging parameter to the charging pile, the direct current charging parameter being used for the charging pile outputting a direct current; sending, by the control unit, a start output instruction to the power unit, the start output instruction being used for controlling the power unit to convert the direct current into a pulse current, the pulse current being used for charging the traction battery.

In some possible embodiments, the pulse charging parameter includes at least one parameter of the following parameters: a pulse current effective value, a pulse current peak, a pulse voltage, a pulse direction, a pulse frequency, a pulse interval and a pulse duration.

In some possible embodiments, the battery state parameter includes at least one parameter of the following parameters: a battery temperature, a battery voltage, a battery capacity and a state of charge (SOC) of battery.

In some possible embodiments, the direct current charging parameter includes an output voltage and/or an output current of the charging pile.

In some possible embodiments, the method further includes: determining, by the control unit, to enter a pulse charging mode on the basis of the battery state parameter, the pulse charging mode is a charging mode using a pulse-type voltage or a pulse-type current.

In some possible embodiments, the battery state parameter includes a battery temperature, the determining, by the control unit, to enter a pulse charging mode on the basis of the battery state parameter, including: under the battery temperature is less than or equal to a temperature threshold condition, determining, by the control unit, to enter the pulse charging mode.

In some possible embodiments, the obtaining, by the control unit, a battery state parameter of the traction battery, includes: receiving, by the control unit, the battery state parameter sent by a battery management system (BMS) of the traction battery.

A third aspect provides a power conversion equipment for charging a traction battery, the power conversion equipment including a processing unit configured to obtain a battery state parameter of the traction battery; a communication unit configured to send a charging information to a charging pile, the charging information including a direct current charging parameter calculated by a pulse charging parameter; the communication unit further configured to receive a direct current output by the charging pile on the basis of the direct current charging parameter; the processing unit further configured to convert the direct current output into a pulse current on the basis of the pulse charging parameter, the pulse current being used for charging the traction battery; where, the battery state parameter is used for determining the pulse charging parameter.

In some possible embodiments, the processing unit is further configured to: determine the pulse charging parameter on the basis of the battery state parameter, the pulse charging parameter including at least one parameter of the following parameters: a pulse current effective value, a pulse current peak, a pulse voltage, a pulse direction, a pulse frequency, a pulse interval and a pulse duration.

In some possible embodiments, the battery state parameter includes at least one parameter of the following parameters: a battery temperature, a battery voltage, a battery capacity and a state of charge (SOC) of battery.

In some possible embodiments, the direct current charging parameter includes an output voltage and/or an output current of the charging pile.

In some possible embodiments, the processing unit is further configured to: determine to enter a pulse charging mode on the basis of the battery state parameter, the pulse charging mode is a charging mode using a pulse-type voltage or a pulse-type current.

In some possible embodiments, the battery state parameter includes a battery temperature, the processing unit is specifically configured to: under the battery temperature is less than or equal to a temperature threshold condition, determine to enter the pulse charging mode.

In some possible embodiments, the communication unit is further configure to: receive the battery state parameter sent by a battery management system (BMS) of the traction battery.

A forth aspect provides a power conversion equipment for charging a traction battery, the power conversion equipment includes: a control unit configured to obtain a battery state parameter of the traction battery; the control unit further configured to obtain a pulse charging parameter on the basis of the battery state parameter; the control unit further configured to transmit the pulse charging parameter to a power unit of the power conversion equipment; the control unit further configured to obtain a direct current charging parameter calculated by the power unit on the basis of the pulse charging parameter; the control unit further configured to send the direct current charging parameter to the charging pile, the direct current charging parameter being used for the charging pile outputting a direct current; the control unit further configured to send a start output instruction to the power unit, the start output instruction being used for controlling the power unit to convert the direct current into a pulse current, the pulse current being used for charging the traction battery.

In some possible embodiments, the pulse charging parameter includes at least one parameter of the following parameters: a pulse current effective value, a pulse current peak, a pulse voltage, a pulse direction, a pulse frequency, a pulse interval and a pulse duration.

In some possible embodiment, the battery state parameter includes at least one parameter of the following parameters: a battery temperature, a battery voltage, a battery capacity and a state of charge (SOC) of battery.

In some possible embodiments, the direct current charging parameter includes an output voltage and/or an output current of the charging pile.

In some possible embodiments, the control unit is further configured to determine to enter a pulse charging mode on the basis of the battery state parameter, the pulse charging mode is a charging mode using a pulse-type voltage or a pulse-type current.

In some possible embodiments, the battery state parameter includes a battery temperature, the control unit is specifically configured to: under the battery temperature is less than or equal to a temperature threshold condition, determine to enter the pulse charging mode.

In some possible embodiments, the control unit is specifically configured to receive the battery state parameter sent by a battery management system (BMS) of the traction battery.

A fifth aspect provides a power conversion equipment including a processor and a memory.

The memory is configured to store a computer program, the processor is configured to call and run the computer program stored in the memory, and executing the method in the first aspect or each embodiment thereof.

A sixth aspect provides a power conversion equipment, including a processor and a memory. The memory is configured to store a computer program, the processor is configured to call and run the computer program stored in the memory, and executing the method in the second aspect or each embodiment thereof.

A seventh aspect provides a computer-readable storage medium for storing a computer program, the computer program is used for executing the method in the first aspect or in each embodiment thereof.

An eighth aspect provides a computer-readable storage medium, used for storing a computer program, the computer program is used for executing the second aspect or the method in each embodiment thereof.

### BRIEF DESCRIPTION OF DRAWINGS

In order to more clearly illustrate the technical solution of embodiments of the present application, the accompanying drawings required by embodiments of the present application are introduced briefly below, obviously, the accompanying drawings depicted below are merely some examples of the present application, for those of ordinary skill in the art, they can also obtain other accompanying drawings on the basis of the accompanying drawings without paying a creative work.
FIG. 1 is a schematic diagram of an application architecture of the power conversion equipment according to embodiments of the present application.
FIG. 2 is a schematic flow chart of charging method of embodiments of the present application.
FIG. 3 is a specific schematic flow chart of the charging method shown in FIG. 2.
FIG. 4 is a schematic diagram of connection of the power conversion equipment with the charging pile and the BMS according to embodiments of the present application.
FIG. 5 is a schematic flow chart of charging method according to another embodiment of the present application.
FIG. 6 is a specific schematic flow chart of the charging method shown in FIG. 5.
FIG. 7 is a schematic block diagram of a power conversion equipment according to embodiments of the present application.
FIG. 8 is another schematic block diagram of the power conversion equipment of embodiments of the present application.
FIG. 9 is more another schematic block diagram of the power conversion equipment of the present application embodiments.

### DESCRIPTION OF EMBODIMENTS

To make the object, technical solution, and advantages of the embodiments of the present application clearer, the technical solution of the embodiments of the present application will be clearly described in conjunction with the accompanying drawings in the embodiments of the present application, and it will be obvious that the described embodiments are part of the embodiments of the present application, but not all of them. Based on the embodiments in the present application, all other embodiments obtained by those of ordinary skill in the art without exerting creative efforts fall within the scope of protection of the present application.

Unless otherwise defined, all the technical and scientific terms used herein have the same meanings as are commonly understood by those skilled in the art of the present application. Terms used herein in the description of the present application are for the purpose of describing specific embodiments only and are not intended to limit the present application. The terms "including" and "having" and any variations thereof in the description and claims as well as the drawings of the present application are intended to cover a non-exclusive inclusion. The terms "first", "second", etc. in the description and claims or the above drawings of the present application or the above drawings are used to distinguish different objects and are not used to describe a particular order or primary-secondary relationship.

The "embodiment" mentioned in the present application means that special features, structures, or characteristics described in conjunction with the embodiments may be included in at least one embodiment of the present application. The occurrence of "embodiment" in various positions in the description does not necessarily refer to the same embodiment, nor is it a separate or alternative embodiment that is mutually exclusive to other embodiments. It is explicitly and implicitly understood by those skilled in the art that the embodiments described herein may be combined with other embodiments.

In the description of the present application, it should also be noted that unless otherwise expressly specified and limited, the terms "mount", "joint", "connect" and "attach" should be understood in a broad sense, for example, it can be a fixed connection or a detachable connection, or being integrally connected; it can be being directly connected or indirectly connected through an intermediate medium, and it can be an internal communication between two components. The specific meanings of the above terms in the present application may be understood in particular to those of ordinary skill in the art.

The term "and/or" in this application is simply a description of the association relationship of the associated objects, indicating that three relationships can exist, for example, A and/or B, which can mean: A exists alone, both A and B exist, and B exists alone. In addition, the character "/" in the present application generally indicates an alternative relationship between the front and back associated objects.

As used in the present application, "multiple" refers to more than two and includes two, similarly, "multiple sets" refers to more than two sets and includes two sets, and "multichip" refers to more than two chips and includes two chips.

The traction battery is a battery that provides a power source to a power consumption device. Optionally, the traction battery may be a traction storage battery. In terms of the type of battery, the traction battery may be a lithium-ion battery, a lithium-metal battery, a lead-acid battery, a nickel-cadmium battery, a nickel-hydrogen battery, a lithium-sulfur battery, a lithiumair battery, a sodium-ion battery, and the like, which are not specifically limited in the embodiment of the present application. In terms of battery scale, the traction battery in the embodiment of the present application may be a cell/battery cell, may also be a battery module or a battery pack, which is not specifically limited in the embodiment of the present application. Optionally, the power consumption device may be a vehicle, a ship, a spacecraft, or the like, and the embodiment of the present application is not limited thereto. Battery management system (Battery Management System, BMS) of the traction battery is a control system to protect the safe use of traction batteries, which implements the functions of charge and discharge management, high voltage control, battery protection, battery data collection, battery status evaluation, and so on. The BMS can be integrated with the traction battery and disposed in the same equipment/device, or the BMS can be disposed outside the traction battery as an independent equipment/device.

A charging pile, also known as a charger, is a device for charging the traction battery. The charging pile can output charging power according to the charging demand of BMS to charge the traction battery. For example, the charging pile may output voltage and current in accordance with the required voltage and required current sent by the BMS.

However, in some special scenarios, the range of voltage and current that the charging pile can output cannot match that of traction batteries. For example, in the low-temperature scene, the minimum voltage or current that the charging pile can output may also lead to lithium plating during charging, and the traction battery cannot be charged normally. In addition, in some cases, power conversion may be needed between the charging pile and the traction battery, such as voltage change, current change, power state change, current, voltage and power timing change, etc.

In view of the above-mentioned situation, embodiments of the present invention provide a power conversion equipment, the power conversion equipment can conduct a power conversion between the charging pile and the traction battery. When there is a need for power conversion between the charging pile and the traction battery, the power conversion equipment converts the power type output by the charging pile into power type required for the traction battery. For example, the power conversion equipment can convert the direct current power output by the charging pile into the pulse power, or, change a voltage value, and change a current value, or change a timing of voltage and current etc., which can effectively ensure normal charging of the traction battery.

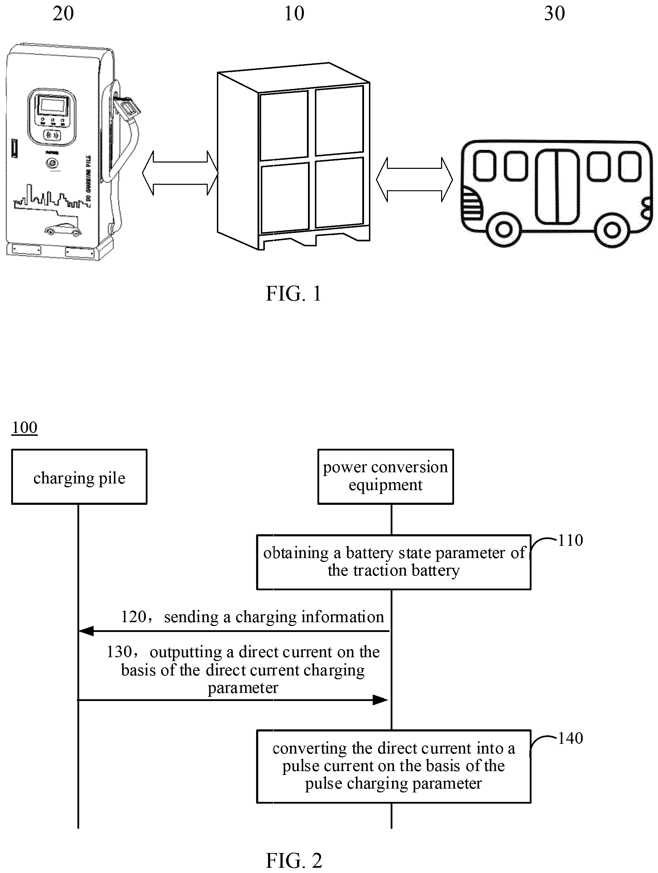

FIG.1 shows a schematic diagram of an application architecture of a power conversion equipment according to embodiments of the present application, the application architecture includes a power conversion equipment 10, a charging pile 20 and a power consumption device 30, for example, the power consumption device 30 can be an electric vehicle shown in Fig 1. In can be seen that, the power conversion equipment 10 is connected between the charging pile 20 and the power consumption device 30 for power conversion, namely, the power conversion equipment 10 separately is connected with the charging pile 20 and the power consumption device 30, the charging pile 20 is not directly connected with the power consumption device 30.

It should be understood that, embodiments of the present application have no specific limit on the name of the power conversion equipment, that is to say, the power conversion equipment can also be referred to as other names, for example, the power conversion equipment can be referred to as a pulse charging and heating equipment.

FIG.2 shows a schematic flow chart of charging method 100 of one embodiment of the present application. It should be understood that, step or operation in FIG.2 is only an example, embodiments of the present application can also execute other operation or variation of various operation of FIG. 2. In addition, each step in FIG. 2 can be executed separately in accordance with an order different from that presented in FIG. 2, and it is likely not to execute all operations in FIG. 2.

The method 100 shown in FIG.2 can be applied in the power conversion equipment, such as the power conversion equipment 10 in FIG. 1. In the following, the method 100 will be described by taking the power consumption device as an electric vehicle as an example. But it should be understood that, the implementation of the present application is not limited to this. The method 100 can include a portion of or all of the following steps.

In step 110, the power conversion equipment obtains a battery state parameter of the traction battery.

Where, the battery state parameter can include but not limited to at least one parameter of the following parameters of the traction battery: a battery temperature, a battery voltage, a battery capacity and a state of charge of battery (State of Charge, SOC).

As an example, the BMS of the traction battery can send the battery state parameter to the power conversion equipment, thereby the power conversion equipment can obtain the battery state parameter.

As another example, the BMS can store the battery state parameter to the cloud, the power conversion equipment can obtain the battery state parameter from the cloud.

Optionally, in embodiments of the present application, the battery state parameter can be used for determining a pulse charging parameter. The pulse charging parameter can include at least one of the following parameters: a pulse current effective value, a pulse current peak, a pulse voltage, a pulse direction, a pulse frequency, a pulse interval and a pulse duration.

As another example, the power conversion equipment can determine the battery state parameter by itself. For example, the power conversion equipment can measure the battery state parameter by itself in a certain way.

In an embodiment, the power conversion equipment can determine the pulse charging parameter on the basis of battery state parameter. For example, the power conversion equipment can determine the pulse charging parameter on the basis of the obtained battery state parameter and on the basis of the corresponding relationship between the battery state parameter and the pulse charging parameter.

Optionally, the corresponding relationship between the battery state parameter and the pulse charging demand parameter may be preconfigured on the power conversion equipment. For example, the corresponding relationship between the battery state parameter and the pulse charging demand parameter can be preconfigured on the power conversion equipment in the form of a table, so that the power conversion equipment can determine the pulse charging demand parameter by looking up the table internally. For example, the corresponding relationship between the battery state parameter and the pulse charging demand parameter can be shown in Table 1, in which the first row is the SOC, the first column is the battery temperature, and A, B, and C are the pulse current demand values. BMS can determine the pulse current demand value according to SOC, battery temperature, and Table 1. If the battery temperature is -10°C and SOC is 30%, BMS can determine the pulse current demand value as B.

**Table 1**

| | 0% | 10% | 20% | 30% | 40% | 50% | 60% | ... | 100% |
|---|---|---|---|---|---|---|---|---|---|
| -20°C | A | A | A | A | A | A | | | |
| -10°C | A | A | B | B | C | C | | | |
| 0°C | B | B | B | B | | | | | |
| 10°C | B | B | B | B | | | | | |
| 20°C | C | C | C | C | | | | | |
| 30°C | C | C | C | C | | | | | |
| ... | | | | | | | | | |

It should be understood that Table 1 is an example only, the SOC is not necessarily 0-100%, and the gradient values of battery temperature and SOC are not necessarily as shown in Table 1. It should also be understood that the corresponding relationship between the battery state parameter and the pulse charging demand parameter may be a linear relationship or a nonlinear relationship.

Optionally, the corresponding relationship between the battery state parameter and the pulse charging parameter can also be obtained by the power conversion equipment form other equipment.

Above-mentioned technical solution, the power conversion equipment may determine the corresponding pulse charging parameter on the basis of the obtained battery state parameter of the traction battery, which can adapt different charging demands of the traction battery in different situations, having a high flexibility and adaptability.

In embodiments of the present application, as a possible embodiment, the power conversion equipment may enter the pulse charging mode first, and then judge whether the state of the traction battery satisfies the condition of pulse charging according to the obtained battery state parameter. If the battery state parameter satisfies the condition of pulse charging, the power conversion equipment executes step 120. If the battery state parameters do not satisfy the condition of pulse charging, the power conversion equipment converts from a pulse charging mode to a direct current charging mode.

Where, the pulse charging mode is a charging mode using a pulse-type voltage or a pulse-type current, and the direct current charging mode is a charging mode using a constant voltage or a constant current.

For example, when the battery state parameter includes the battery temperature, if the battery temperature is less than or equal to a temperature threshold (exemplary, the temperature threshold is 5°C), the power conversion equipment can determine that the state of the traction battery satisfies the pulse charging condition, and executes step 120. Alternatively, when the battery state parameter includes the SOC, if the SOC is less than or equal to the SOC threshold, the power conversion equipment can determine that the state of the traction battery satisfies the pulse charging condition, and executes step 120. Alternatively, when the battery state parameter includes the battery temperature and SOC, if the battery temperature is less than and/or equal to the temperature threshold and the SOC is less than or equal to the SOC threshold, the power conversion equipment can determine that the state of the traction battery satisfies the pulse charging condition, and executes step 120.

To solve the problem of charging electric vehicles in a low-temperature environment, the traction batteries of some electric vehicles in the market are equipped with a thermal management system. When the temperature of the traction battery is too low, the thermal management system can convert a part of electric energy into heat energy, thus heating the whole battery group. This preheating method can make the traction battery at a more suitable temperature, based on this, the charging pile then charges the traction battery. However, this preheating method is to charge the traction battery after the temperature of the traction battery is increased. The space for increasing the temperature of the traction battery is limited, which makes it impossible to fundamentally solve the problem that the charging time of electric vehicles is too long in a low-temperature environment. In addition, the configuration of the thermal management system in the traction battery will not only increase the weight of the traction battery, but also increase the cost of the traction battery.

With the above technical solution, the power conversion equipment is in a pulse charging mode at a low-temperature environment, that is, the direct current output by the charging pile can be converted into a pulse current, so that the normal charging of the traction battery can be realized. Compared with the traditional way, it is not necessary in the embodiment of the present application to provide a heating device in the battery pack to pre-heat the traction battery, so that the charging time can be greatly shortened, the battery temperature can be rapidly increased, and the charging efficiency of the traction battery can be effectively improved. Furthermore, since the heating device is not disposed in the battery pack, the technical solution can also reduce the weight and cost of the traction battery.

On the contrary, when the battery state parameter includes battery temperature, if the battery temperature is greater than the temperature threshold, the power conversion equipment can determine that the traction battery state does not satisfy the pulse charging condition, the power conversion equipment can convert from the pulse charging mode into a direct current charging mode. For example, the power conversion equipment can exit working mode, the charging pile directly output direct current to the traction battery; or, the power conversion equipment can retransmit the direct current output by the charging pile to the traction battery.

In another possible embodiment, the power conversion equipment can enter direct current charging mode first, and then judge whether the state of traction battery satisfies the condition of pulse charging according to the battery state parameter. If the battery state parameter satisfies the condition of pulse charging, the power conversion equipment converts from the direct current charging mode to the pulse charging mode. If the battery state parameter does not satisfy the condition of pulse charging, the power conversion equipment continues to maintain the direct current charging mode.

In another possible embodiment, after obtaining the battery state parameter, the power conversion equipment can determine to enter the pulse charging mode or enter the direct current charging mode on the basis of the battery state parameter.

In step 120, the power conversion equipment sends charging information to the charging pile (or referred to as charger), the charging information includes the direct current charging parameter calculated from the pulse charging parameter.

After entering the pulse charging mode and obtaining the pulse charging parameter, the power conversion equipment can determine the direct current charging parameter corresponding to the pulse charging parameter on the basis of pulse charging parameter. The direct current charging parameter can include at least one of the following parameters: a output voltage that controls the charging pile output, a output current that controls the charging pile output and a charging mode. Where, the charging mode can be constant current mode or constant voltage mode.

Specifically, after obtaining the pulse charging parameter, the power conversion equipment can be calculated based on the pulse charging parameter, to obtain the direct current charging parameter. Or the power conversion equipment can determine the direct current charging parameter corresponding to the pulse charging parameter, on the basis of the corresponding relationship between pulse charging parameter with the direct current charging parameter and on the basis of the pulse charging parameter.

After that, the power conversion equipment can send the charging information to the charging pile, the charging information includes direct current charging parameter, the charging information can serve as the charging demand of the BMS. Specifically, the power conversion equipment can send a first message to the charging pile, the content included in the first message can be as shown in Table 2.

**Table 2**

| Serial number | Content | Length |
|---|---|---|
| 1 | output voltage (V) of the charging pile | 2 bytes |
| 2 | output current (A) of the charging pile | 2 bytes |
| 3 | charging mode (0x01: constant voltage mode; 0x02: constant current mode) | 2 bytes |

Optionally, the method 100 can also include: the power conversion equipment sending a permit output instruction to the charging pile, the permit output instruction is used for indicating the charging pile to output a direct current. Where, after step 120, the power conversion equipment can send a permit output instruction to the charging pile, or, the power conversion equipment can send a permit output instruction to the charging pile while executing step 120, namely, the power conversion equipment can simultaneously send a charging information and a permit output instruction to the charging pile.

In step 130, the charging pile outputs a direct current to the power conversion equipment, correspondingly, the power conversion equipment can receive a direct current output by the charging pile.

After receiving the charging information, the charging pile can output a direct current to the power conversion equipment based on the direct current charging parameter.

In step 140, on the basis of pulse charging parameter, the power conversion equipment converts a direct current into a pulse current, the pulse current is used for charging the traction battery.

It should be noted that the pulse current of embodiments of the present application can also be referred to as pulse current waveform or pulse charging waveform.

Optionally, in embodiments of the present application, the method 100 can also include: during the pulse charging, the power conversion equipment judges in real time the state of the traction battery whether meets the condition of the pulse charging. If the traction battery current state meets the condition of the pulse charging, the power conversion equipment continues to maintain the pulse charging mode; if the traction battery current state does not meet the condition of the pulse charging, the power conversion equipment exits the pulse charging mode.

As an example, the power conversion equipment can judge the state of traction battery whether meets the condition of the pulse charging every preset time duration. For example, the power conversion equipment can judge the state of traction battery whether meets the condition of the pulse charging every Is.

Optionally, the preset time duration can be negotiated between the power conversion equipment and the BMS.

Optionally, the preset time duration can be self-determined by the power conversion equipment.

As another example, when obtaining the battery state parameter, the power conversion equipment can judge the state of the traction battery whether meets the condition of the pulse charging. That is to say, the power conversion equipment judges the state of the primary traction battery whether meets the condition of pulse charging every time it obtains the battery state parameter.

In order to output a best pulse current suitable for traction battery charging, the method 100 can also include: the power conversion equipment adjusting the pulse charging parameter in real time.

Specifically, the BMS can send the current battery state parameter to the power conversion equipment in real time. For example, if the battery state of the traction battery changes, the BMS sends current battery state parameter to the power conversion equipment. Or, the BMS can periodically send the current battery state parameter to the power conversion equipment. After receiving the current battery state parameter, the power conversion equipment can determine the pulse charging parameter based on the current battery state parameter. Thus, the determined pulse charging parameter corresponds to the current state of the traction battery, thereby the best pulse current being suitable for the traction battery charging can be output.

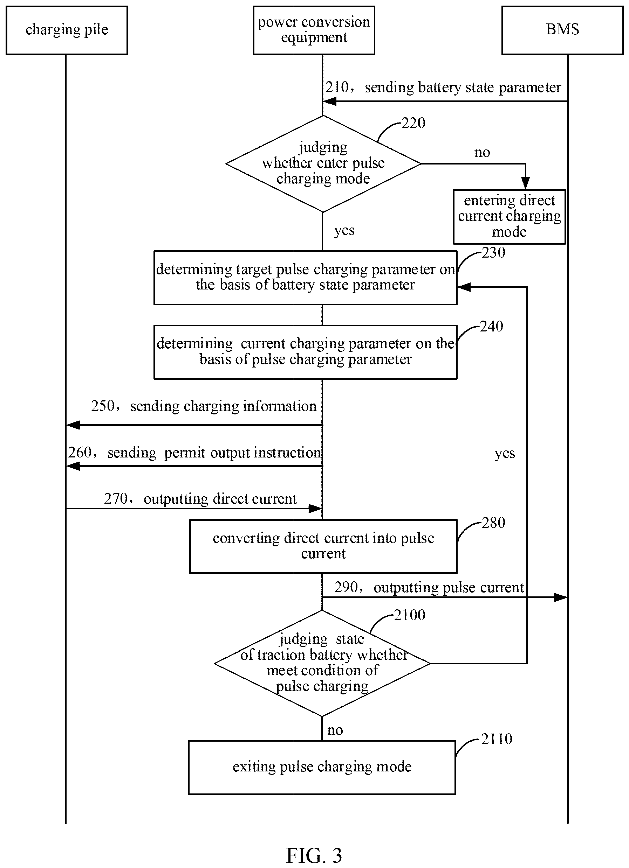

FIG. 3 is a specific flow chart of method 100. It should be understood that, FIG. 3 is only intended to assist in better understanding of embodiments of the present application by those skilled in the art, and not to limit the scope of embodiments of the present application.

In 210, the BMS sends the battery state parameter to the power conversion equipment.

In 220, the power conversion equipment judges whether enters pulse charging mode.

For example, the power conversion equipment compares the battery temperature with the temperature threshold, assuming that the temperature threshold is 5°C. If the battery temperature is less than or equal to 5°C, the power conversion equipment determines to enter the pulse charging mode, and execute step 230; if the battery temperature is greater than 5°C, the power conversion equipment enters direct current charging mode.

In 230, the power conversion equipment determines the pulse charging parameter on the basis of the battery state parameter.

In 240, the power conversion equipment determines the direct current charging parameter on the basis of the pulse charging parameter.

In 250, the power conversion equipment sends the charging information to the charging pile, the charging information includes the direct current charging parameter.

In 260, the power conversion equipment sends a permit output instruction to the charging pile, the permit output instruction is used for indicating the charging pile to output a direct current.

In 270, on the basis of the direct current charging parameter, the charging pile outputs a direct current to the power conversion equipment.

In 280, after receiving the direct current, the power conversion equipment converts the direct current into a pulse current on the basis of the pulse charging parameter.

In 290, the power conversion equipment outputs a pulse current to the traction battery, to charge the traction battery.

In 2100, during the pulse charging, on the basis of the current battery state parameter, the power conversion equipment judges the traction battery current state whether meets the condition of the pulse charging.
if current state of the traction battery does not meet the condition of the pulse charging, the power conversion equipment execute step 2110; if current state of the traction battery meets the condition of the pulse charging, the power conversion equipment executes step 230, and on

the basis of current battery state parameter adjusts the pulse charging parameter.

In 2110, the power conversion equipment exits the pulse charging mode.

Embodiment of the present application connects the power conversion equipment between the charging pile and the traction battery, the power conversion equipment can convert the direct current output by the charging pile into a pulse current, and transmit the converted pulse current into the traction battery, which can avoid the problem of the ranges of voltage and current output by the charging pile being unable to match with the traction battery in some scenarios, thereby ensuring the normal charging of the traction battery. In addition, the battery state parameter can be a parameter which can most reflect the traction battery state, the pulse current converted from the battery state parameter can effectively ensure the normal power supply of the traction battery.

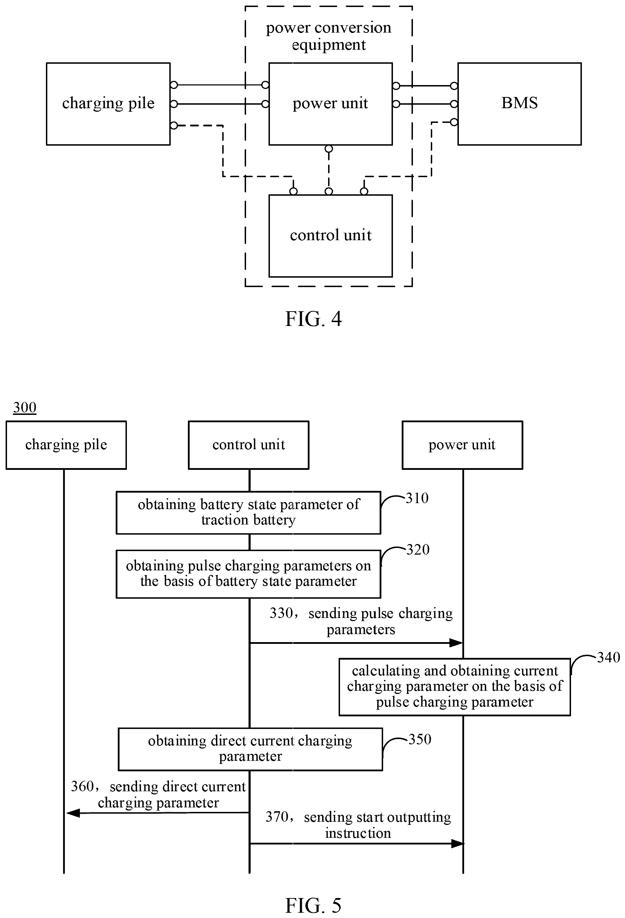

Optionally, in embodiments of the present application, as shown in FIG.4, the power conversion equipment can include a control unit and a power unit, in FIG.4 the solid line represents a power line, and the dashed line represents a communication line. Where, the control unit is responsible for detecting the state of the charging pile and the BMS during charging, and separately connecting with the charging pile and the BMS via a communication line, to separately execute information interaction with the charging pile and the BMS. In addition, the control unit is also connected with the power unit via the communication line, for conducting an information interaction with the power unit, and controlling the power unit to conduct a power conversion. For example, communication line can be a controller area network (Controller Area Network, CAN) communication line or a daisy chain (daisy chain) communication line.

The power unit is responsible for converting the power type of charging pile output into the power type required for the traction battery, on the basis of the instruction from the control unit. The power unit and the control unit are connected via a communication line, for information interaction. A communication protocol can be configured between the control unit and the power unit, for example, for defining styntax, semantics and timing of communication, etc., to ensure normal interaction between the control unit and the power unit.

A control strategy can be configured on the control unit. For example, the control unit determines the state of current charging process by parsing the charging message of the charging pile and the BMS, for controlling the power unit to conduct the corresponding operation.

Bases on the power conversion equipment shown in FIG. 4, another charging method according to embodiments of the present application is introduced in detail below. FIG. 5 shows a schematic flow chart of charging method 300 according to another example of the present application. Method 300 shown in FIG. 5 can be applied in the power conversion equipment shown in FIG.3. The method 300 can include a portion of or all of the following steps.

At step 310, the control unit obtains the battery state parameter of the traction battery.

At step 320, the control unit obtains the pulse charging parameter on the basis of the battery state parameter.

At step 330, the control unit transmits the pulse charging parameter to the power unit.

For example, the control unit can transmit the pulse charging parameter to the power unit via a CAN communication line.

For example, the control unit can send a second message to the power unit, the contents included in the second message can be as shown in Table 3.

**Table 3**

| Serial number | Content | Length | Note |
|---|---|---|---|
| 1 | pulse voltage peak(V) | 2 bytes | |
| 2 | pulse current effective value(A) | 2 bytes | unit: A resolution: 0.1 A/byte range: -2000A∼2000A offset: -2000A |
| 3 | pulse current peak | 2 bytes | unit: A resolution: 0.1 A/byte range: -2000A∼2000A offset: 2000A |
| 4 | pulse direction | 1 byte | 1: positive direction; 2: negative direction; 3: bi-direction (positive direction and negative direction) |
| 5 | pulse frequency | 2 bytes | Unit: Hz Resolution: 1 Hz/byte Range:0∼10000 Hz offset: 0 |

At step 340, the power unit calculates and obtains a direct current charging parameter on the basis of the pulse charging parameter.

At step 350, the control unit obtains the direct current charging parameter.

Optionally, the power unit can send the direct current charging parameter to the control unit, thereby the control unit can obtain the direct current charging parameter. Where, the power unit can send a direct current charging parameter to the control unit by means of a main CAN communication,

Optionally, after calculating and obtaining the direct current charging parameter, the power unit can send the direct current charging parameter to a cloud, and the control unit can obtain the direct current charging parameter from the cloud.

At step 350, the control unit sends a direct current charging parameter to the charging pile, the direct current charging parameter is used for indicating the charging pile to output direct current.

At step 360, the control unit sends a start output instruction to the power unit, the start output instruction is used for controlling the power unit to convert the direct current into a pulse current, the pulse current is used for charging the traction battery.

Where, step 350 and step 360 can simultaneously be executed at the same time, or step 360 can be executed after step 350.

After the power unit receiving the start output instruction, the power unit can convert the direct current output by the charging pile into a pulse current on the basis of pulse charging parameter, for charging the traction battery.

Optionally, the method 300 can also include: if the battery state parameter reaches the parameter threshold, such as the battery temperature being 10°C, the control unit can send an exit instruction to the power unit, the exit instruction is used for indicating the power unit to exit the pulse charging mode.

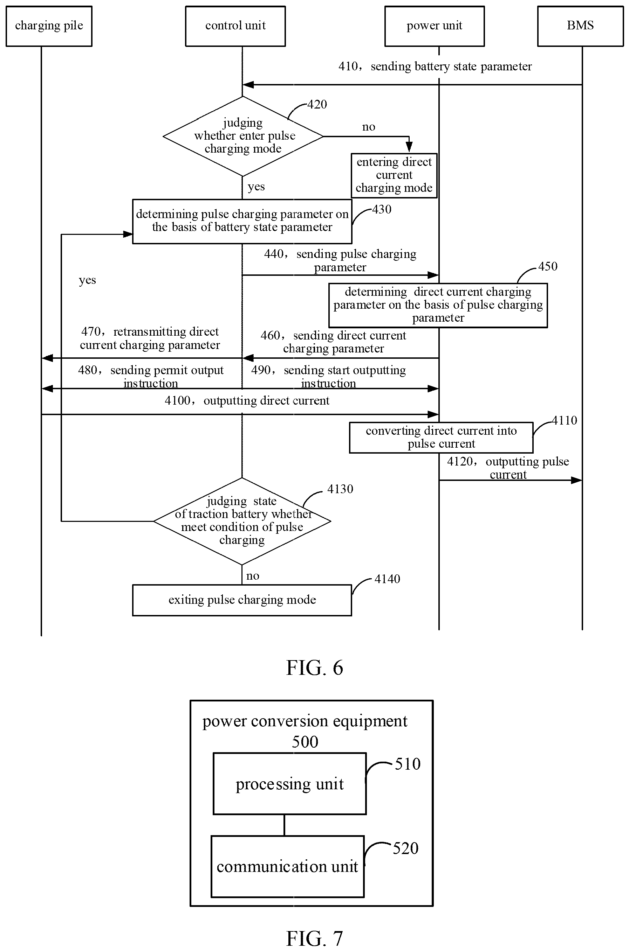

In order to more clearly describe embodiments of the present application, in conjunction with FIG. 6, one specific implementation procedure of the method 300 is described in detail below.

At step 410, the BMS sends the battery state parameter to the control unit.

At step 420, the control unit judge whether enter the pulse charging mode.

For example, the control unit compares the battery temperature with the temperature threshold, assuming that the temperature threshold is 5°C. If the battery temperature is less than or equal to 5°C, the control unit determines to enter the pulse charging mode; if the battery temperature is greater than 5°C, the control unit enters the direct current charging mode.

At step 430, the control unit determines the pulse charging parameter on the basis of battery state parameter.

For example, the control unit can determine the pulse charging parameter by means of an internal lookup table.

At step 440, the control unit sends a pulse charging parameter to the power unit.

At step 450, the power unit calculates and obtains a direct current charging parameter on the basis of the pulse charging parameter.

At step 460, the power unit sends a direct current charging parameter to the control unit.

At step 470, the control unit retransmit a received direct current charging parameter to the charging pile.

At step 480, the control unit sends a permit output instruction to the charging pile, the permit output instruction is used for indicating the charging pile to output direct current.

Where, step 480 can be executed or can be executed with step 470 simultaneously.

At step 490, the control unit sends a start output instruction to the power unit, the start out put instruction is used for controlling the power unit to convert the direct current into the pulse current.

Where, step 490 can be executed after step 470, it can also be executed with step 470 simultaneously.

At step 4100, the charging pile outputs a direct current to the power unit on the basis of direct current charging parameter.

After receiving the permit output instruction, the charging pile can output a direct current to a power unit on the basis of direct current charging parameter.

At step 4120, after receiving the direct current, the power unit converts the direct current into a pulse current on the basis of pulse charging parameter.

At step 4120, the power unit output a pulse current to the traction battery, for charging the traction battery.

At step 4130, during the pulse charging, on the basis of current battery state parameter, the control unit judges the current state of the traction battery whether meets the condition of the pulse charging.

If the current state of the traction battery does not meet the condition of the pulse charging, the control unit executes step 4140; if the traction battery current state meets the condition of pulse charging, the control unit executes step 430, namely, adjusts the pulse charging parameter on the basis of current battery state parameter.

At step 4140, the control unit exits pulse charging mode.

It should be understood that, although the methods 100 and 200 have been described separately, it is not meant that the methods 100 and 200 are independent, and description of each method can be referred to each other. Without contradiction, optional schemes of the methods 100 and 200 can be combined to use or the related description of the method 100 can apply to the method 200.

In the embodiments of the present application, the serial number of the above-mentioned processes does not mean the sequence of execution, and the execution sequence of each process should be determined by its function and internal logic, and should not constitute any limitation on the implementation process of the embodiments of the present application.

Moreover, on the premise of no conflict, each embodiment described in the present application and/or the technical features in each embodiment can be arbitrarily combined with each other, and the technical solution obtained after combination should also fall within the scope of protection of the present application.

The charging method of the embodiment of the present application has been described in detail above, and the power conversion device of the embodiment of the present application will be described below. It should be understood that the power conversion device in the embodiment of the present application may execute the charging method in the embodiment of the present application and has a function of executing the corresponding method

FIG.7 shows a schematic block diagram of a power conversion equipment 500 according to embodiments of the present application. The power conversion equipment 500 is used for charging the traction battery, as shown in FIG.7, the power conversion equipment 500 can includes:
a processing unit 510 configured to obtain a battery state parameter of the traction battery.
a communication unit 520 configured to send a charging information to a charging pile, the charging information including a direct current charging parameter calculated by a pulse charging parameter.

The communication unit 520 further configured to receive a direct current output by the charging pile on the basis of the direct current charging parameter.

The processing unit 510 further configured to convert the direct current into a pulse current on the basis of the pulse charging parameter, the pulse current being used for charging the traction battery.

Where, the battery state parameter is used for determining the pulse charging parameter.

Optionally, in embodiments of the present application, the processing unit 510 is further configured to: determine the pulse charging parameter on the basis of the battery state parameter, the pulse charging parameter including at least one parameter of the following parameters: a pulse current effective value, a pulse current peak, a pulse voltage, a pulse direction, a pulse frequency, a pulse interval and a pulse duration.

Optionally, in embodiments of the present application, the battery state parameter includes at least one parameter of the following parameters: a battery temperature, a battery voltage, a battery capacity and a battery state of charge (SOC).

Optionally, in embodiments of the present application, the direct current charging parameter includes an output voltage and/or an output current of the charging pile.

Optionally, in embodiments of the present application, the processing unit 510 is further configured to: determine to enter a pulse charging mode on the basis of the battery state parameter, the pulse charging mode is a charging mode using a pulse-type voltage or a pulse-type current.

Optionally, in embodiments of the present application, the battery state parameter includes a battery temperature, the processing unit 510 is specifically configured to: under the battery temperature is less than or equal to a temperature threshold condition, determine to enter the pulse charging mode.

Optionally, in embodiments of the present application, the communication unit 520 is further configure to: receive the battery state parameter sent by a battery management system (BMS) of the traction battery.

It should be understood that the power conversion equipment 500 can implement the corresponding operation in the method 100, for brevity, it is not described here.

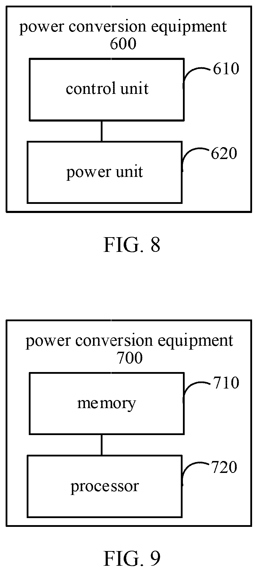

FIG.8 shows a schematic block diagram of a power conversion equipment 600 according to embodiments of the present application. The power conversion equipment 600 is used for charging the traction battery, as shown in FIG.8, the power conversion equipment 600 can include:
a control unit 610 configured to obtain a battery state parameter of the traction battery.

The control unit 610 further configured to obtain a pulse charging parameter on the basis of the battery state parameter.

The control unit 610 further configured to transmit the pulse charging parameter to a power unit 620 of the power conversion equipment 600.

The control unit 610 further configured to obtain a direct current charging parameter calculated by the power unit 620 on the basis of the pulse charging parameter.

The control unit 610 further configured to send the direct current charging parameter to the charging pile, the direct current charging parameter being used for the charging pile outputting a direct current.

The control unit 610 further configured to send a start output instruction to the power unit, the start output instruction being used for controlling the power unit to convert the direct current into a pulse current, the pulse current being used for charging the traction battery.

Optionally, in embodiments of the present application, the pulse charging parameter includes at least one parameter of the following parameters: a pulse current effective value, a pulse current peak, a pulse voltage, a pulse direction, a pulse frequency, a pulse interval and a pulse duration.

Optionally, in embodiments of the present application, the battery state parameter includes at least one parameter of the following parameters: a battery temperature, a battery voltage, a battery capacity and a state of charge (SOC) of battery.

Optionally, in embodiments of the present application, the direct current charging parameter includes an output voltage and/or an output current of the charging pile.

Optionally, in embodiments of the present application, the control unit 610 is further configured to: determine to enter a pulse charging mode on the basis of the battery state parameter, the pulse charging mode is a charging mode using a pulse-type voltage or a pulse-type current.

Optionally, in embodiments of the present application, the battery state parameter includes a battery temperature, the control unit 610 is specifically configured to: under the battery temperature is less than or equal to a temperature threshold condition, determine to enter the pulse charging mode.

Optionally, in embodiments of the present application, the control unit 610 is specifically configured to: receive the battery state parameter send by a battery management system (BMS) of the traction battery.

It should be understood that the power conversion equipment 600 can implement the corresponding operation in the method 300, for brevity, it is not described here.

FIG.9 shows a schematic block diagram of power conversion equipment 700 in another embodiment of the present application. As shown in FIG.9, the power conversion equipment 700 includes a memory 710 and a processor 720. Where, the memory 710 is coupled with the processor 720, the memory 710 is configured to store a program instruction, the processor 720 is configured to call the program instruction stored in memory 710, to execute the aforementioned method of various embodiment of the present application.

Embodiments of the present application also provide a computer-readable storage medium used for storing a computer program, the computer program is used for executing the aforementioned method of various embodiments of the present application.

Finally it is should be noted that: the above embodiments are only used to illustrate the technical solution of the present application, not to limit it; although the present application has been illustrated in detail by referring to the aforementioned embodiments, those of ordinary skill in the art should understood that: they can still can make modification to the technical solution recorded in the aforementioned each embodiment, or make equivalent replacement to part of technical features thereof, but these modifications or replacements does not make the nature of the corresponding technical solution departing from the spirit and scope of the technical solution of each embodiment of the present application.

## Claims

1. A charging method for charging a traction battery, the method comprising:
obtaining, by a power conversion equipment, a battery state parameter of the traction battery;
sending, by the power conversion equipment, a charging information to a charging pile, the charging information comprising a direct current charging parameter calculated by a pulse charging parameter;
receiving, by the power conversion equipment, a direct current output by the charging pile on the basis of the direct current charging parameter;
converting, by the power conversion equipment, the direct current into a pulse current on the basis of the pulse charging parameter, the pulse current being used for charging the traction battery;
wherein, the battery state parameter is used for determining the pulse charging parameter.

2. The method according to claim 1, wherein the method further comprises:
determining, by the power conversion equipment, the pulse charging parameter on the basis of the battery state parameter, the pulse charging parameter comprising at least one parameter of the following parameters: a pulse current effective value, a pulse current peak, a pulse voltage, a pulse direction, a pulse frequency, a pulse interval and a pulse duration.

3. The method according to claim 1 or 2, wherein the battery state parameter comprises at least one parameter of the following parameters: a battery temperature, a battery voltage, a battery capacity and a state of charge (SOC) of battery.

4. The method according to claim 1 or 2, wherein the direct current charging parameter comprises an output voltage and/or an output current of the charging pile.

5. The method according to claim 1 or 2, wherein the method further comprises:
determining, by the power conversion equipment, to enter a pulse charging mode on the basis of the battery state parameter, the pulse charging mode is a charging mode using a pulse-type voltage or a pulse-type current.

6. The method according to claim 5, wherein the battery state parameter comprises a battery temperature, the determining, by the power conversion equipment, to enter a pulse charging mode on the basis of the battery state parameter, comprising:
under the battery temperature is less than or equal to a temperature threshold condition, determining, by the power conversion equipment, to enter the pulse charging mode.

7. The method according to claim 1 or 2, wherein the obtaining, by a power conversion equipment, a battery state parameter of the traction battery, comprises:
receiving, by a power conversion equipment, the battery state parameter sent by a battery management system (BMS) of the traction battery.

8. A charging method for charging a traction battery, the method being applied for a power conversion equipment, the power conversion equipment comprising a control unit and a power unit, the method comprising:
obtaining, by the control unit, a battery state parameter of the traction battery;
obtaining, by the control unit, a pulse charging parameter on the basis of the battery state parameter;
transmitting, by the control unit, the pulse charging parameter to the power unit;
obtaining, by the control unit, a direct current charging parameter calculated by the power unit on the basis of the pulse charging parameter;
sending, by the control unit, the direct current charging parameter to the charging pile, the direct current charging parameter being used for the charging pile outputting a direct current;
sending, by the control unit, a start output instruction to the power unit, the start output instruction being used for controlling the power unit to convert the direct current into a pulse current, the pulse current being used for charging the traction battery.

9. The method according to claim 8, wherein the pulse charging parameter comprises at least one parameter of the following parameters: a pulse current effective value, a pulse current peak, a pulse voltage, a pulse direction, a pulse frequency, a pulse interval and a pulse duration.

10. The method according to claim 8 or 9, wherein the battery state parameter comprises at least one parameter of the following: a battery temperature, a battery voltage, a battery capacity and a state of charge (SOC) of battery.

11. The method according to claim 8 or 9, wherein the direct current charging parameter comprises an output voltage and/or an output current of the charging pile.

12. The method according to claim 8 or 9, wherein the method further comprises:
determining, by the control unit, to enter a pulse charging mode on the basis of the battery state parameter, the pulse charging mode is a charging mode using a pulse-type voltage or a pulse-type current.

13. The method according to claim 12, wherein the battery state parameter comprises a battery temperature, the determining, by the control unit, to enter a pulse charging mode on the basis of the battery state parameter, comprising:
under the battery temperature is less than or equal to a temperature threshold condition, determining, by the control unit, to enter the pulse charging mode.

14. The method according to claim 8 or 9, wherein the obtaining, by the control unit, a battery state parameter of the traction battery, comprises:
receiving, by the control unit, the battery state parameter sent by a battery management system (BMS) of the traction battery.

15. A power conversion equipment for charging a traction battery, the power conversion equipment comprising:
a processing unit configured to obtain a battery state parameter of the traction battery;
a communication unit configured to send a charging information to a charging pile, the charging information comprising a direct current charging parameter calculated by a pulse charging parameter;
the communication unit further configured to receive a direct current output by the charging pile on the basis of the direct current charging parameter;
the processing unit further configured to convert the direct current into a pulse current on the basis of the pulse charging parameter, the pulse current being used for charging the traction battery;
wherein, the battery state parameter is used for determining the pulse charging parameter.

16. The power conversion equipment according to claim 15, wherein the processing unit is further configured to:
determine the pulse charging parameter on the basis of the battery state parameter, the pulse charging parameter comprising at least one parameter of the following parameters: a pulse current effective value, a pulse current peak, a pulse voltage, a pulse direction, a pulse frequency, a pulse interval and a pulse duration.

17. The power conversion equipment according to claim 15 or 16, wherein the battery state parameter comprises at least one parameter of the following parameters: a battery temperature, a battery voltage, a battery capacity and a state of charge (SOC) of battery.

18. The power conversion equipment according to claim 15 or 16, wherein the direct current charging parameter comprises an output voltage and/or an output current of the charging pile.

19. The power conversion equipment according to claim 15 or 16, wherein the processing unit is further configured to:
determine to enter a pulse charging mode on the basis of the battery state parameter, the pulse charging mode is a charging mode using a pulse-type voltage or a pulse-type current.

20. The power conversion equipment according to claim 19, wherein the battery state parameter comprises a battery temperature, the processing unit is specifically configured to:
under the battery temperature is less than or equal to a temperature threshold condition, determine to enter the pulse charging mode.

21. The power conversion equipment according to claim 15 or 16, wherein the communication unit is further configure to:
receive the battery state parameter send by a battery management system (BMS) of the traction battery.

22. A power conversion equipment for charging a traction battery, the power conversion equipment comprises:
a control unit configured to obtain a battery state parameter of the traction battery;
the control unit further configured to obtain a pulse charging parameter on the basis of the battery state parameter;
the control unit further configured to transmit the pulse charging parameter to a power unit of the power conversion equipment;
the control unit further configured to obtain a direct current charging parameter calculated by the power unit on the basis of the pulse charging parameter;
the control unit further configured to send the direct current charging parameter to the charging pile, the direct current charging parameter being used for the charging pile outputting a direct current;
the control unit further configured to send a start output instruction to the power unit, the start output instruction being used for controlling the power unit to convert the direct current into a pulse current, the pulse current being used for charging the traction battery.

23. The power conversion equipment according to claim 22, wherein the pulse charging parameter comprise at least one parameter of the following parameters: a pulse current effective value, a pulse current peak, a pulse voltage, a pulse direction, a pulse frequency, a pulse interval and a pulse duration.

24. The power conversion equipment according to claim 22 or 23, wherein the battery state parameter comprise at least one parameter of the following parameters: a battery temperature, a battery voltage, a battery capacity and a state of charge (SOC) of battery.

25. The power conversion equipment according to claim 22 or 23, wherein the direct current charging parameter comprises an output voltage and/or an output current of the charging pile.

26. The power conversion equipment according to claim 22 or 23, wherein the control unit is further configured to:
determine to enter a pulse charging mode on the basis of the battery state parameter, the pulse charging mode is a charging mode using a pulse-type voltage or a pulse-type current.

27. The power conversion equipment according to claim 26, wherein the battery state parameter comprises a battery temperature, the control unit is specifically configured to:
under the battery temperature is less than or equal to a temperature threshold condition, determine to enter the pulse charging mode.

28. The power conversion equipment according to claim 22 or 23, wherein the control unit is specifically configured to:
receive the battery state parameter send by a battery management system (BMS) of the traction battery.
